# EUROPEAN PATENT APPLICATION

(11) **EP 4 621 968 A1**
(43) Date of publication of application: **24.09.2025**
(21) Application number: 24787786.3
(22) Date of filing: 31.01.2024
(51) Int. Cl.: H01M 50/342

(54) **BATTERY CELL, BATTERY AND ELECTRIC DEVICE**

(30) Priority: 12.04.2023 CN 202310389312
(71) Applicant: Contemporary Amperex Technology Co., Limited, Ningde, Fujian 352100 (CN)
(72) Inventor: CHEN, Shengwang, Ningde, Fujian 352100 (CN); GUO, Zhijun, Ningde, Fujian 352100 (CN); WANG, Peng, Ningde, Fujian 352100 (CN)
(74) Representative: Ziebig Hengelhaupt Intellectual Property Attorneys Patentanwaltskanzlei PartGmbB
(86) International application number: PCT/CN2024/075001
(87) International publication number: WO 2024/212680

(57) **Abstract**

This application discloses a battery cell, a battery, and an electric apparatus. The battery cell includes a housing and an electrode terminal. The housing includes a wall portion, where the wall portion is provided with an outlet hole. The electrode terminal is disposed at the outlet hole, where the electrode terminal is provided with a weak region, and the weak region is configured to be ruptured when an internal pressure of the housing exceeds a pressure threshold or a temperature exceeds a temperature threshold, allowing interior of the housing to communicate with exterior of the housing. **In** this way, a risk of explosion of the battery cell can be reduced.

## Description

### TECHNICAL FIELD

This application relates to the field of battery technology, in particular to a battery cell, a battery, and an electric apparatus.

### BACKGROUND

With the development of battery technology, battery cells are applied in an increasing number of fields and are gradually replacing traditional petrochemical energy in the field of automotive power. Battery cells can store chemical energy and controllably convert chemical energy into electrical energy. In recyclable battery cells, after discharge, active materials can be activated through charging for continued use.

A battery cell usually includes an electrode assembly, an electrode terminal, and a housing. The electrode assembly is electrically connected to the outside through the electrode terminal. The housing can accommodate the electrode assembly and provide support for the electrode assembly. The interior of the housing can accommodate an electrolyte, and the electrolyte and active materials on the electrode assembly can generate gas, causing an increase in internal pressure of the housing, thereby resulting in a risk of explosion of the battery cell.

### SUMMARY

In view of the above issues, this application provides a battery cell, a battery, and an electric apparatus capable of reducing the risk of explosion of the battery cell.

According to a first aspect, this application provides a battery cell, where the battery cell includes a housing and an electrode terminal. The housing includes a wall portion, and the wall portion is provided with an outlet hole. The electrode terminal is disposed at the outlet hole, the electrode terminal is provided with a weak region, and the weak region is configured to be ruptured when an internal pressure of the housing exceeds a pressure threshold or a temperature exceeds a temperature threshold, allowing the interior of the housing to communicate with the exterior of the housing.

Through the above manner, when the pressure exceeds the pressure threshold or the temperature exceeds the temperature threshold, the weak region is ruptured, allowing excess gas inside the housing to be discharged, thereby reducing the risk of explosion of the battery cell due to excessive internal pressure. Compared to disposing the weak region on the housing, disposing the weak region on the electrode terminal can reduce the likelihood of deformation of the housing, facilitating the assembly of the battery cell.

In some embodiments, the electrode terminal is provided with an indentation slot, and the weak region forms a bottom of the indentation slot.

Through the above manner, processing of the weak region is facilitated, and when the pressure exceeds the pressure threshold or the temperature exceeds the temperature threshold, the electrode terminal can fracture or bend along the indentation slot under the action of pressure, allowing excess gas inside the housing to be discharged, thereby reducing the risk of explosion of the battery cell due to excessive internal pressure.

In some embodiments, the electrode terminal includes an insertion portion and a first flange portion connected to each other, where the insertion portion is inserted into the outlet hole along an axial direction of the electrode terminal, and in a radial direction of the electrode terminal, an outer circumferential surface of the first flange portion at least partially extends beyond an outer circumferential surface of the insertion portion, and a portion of the first flange portion disposed at the periphery of the outlet hole is supported on a side of the wall portion facing the interior of the housing, where the weak region is disposed on the insertion portion and/or the first flange portion.

Through the above manner, since the pressure inside the housing exerts a relatively large force on the insertion portion and the first flange portion, disposing the weak region on the insertion portion or the first flange portion can make the weak region more sensitive to the internal pressure of the housing, thereby more effectively achieving an explosion-proof effect.

In some embodiments, the electrode terminal is provided with an indentation slot, where the weak region forms the bottom of the indentation slot, and the indentation slot is disposed on a side surface of the first flange portion facing and/or facing away from the wall portion.

Through the above manner, on one hand, processing of the weak region is facilitated, and on the other hand, since the thickness of the first flange portion in the axial direction is generally relatively small, the indentation slot is more sensitive to the internal pressure of the housing, thereby more effectively achieving an explosion-proof effect.

In some embodiments, the indentation slot is at least partially disposed opposite a matching gap between the outer circumferential surface of the insertion portion and a wall of the outlet hole along the axial direction.

Through the above manner, when the electrode terminal fractures or bends along the indentation slot, the electrode terminal can more easily detach from the outlet hole, enabling rapid pressure relief and more effectively achieving an explosion-proof effect.

In some embodiments, in the radial direction, a radial width of the matching gap is greater than a radial width of the indentation slot.

Through the above manner, when the electrode terminal fractures or bends along the indentation slot, the electrode terminal can more easily detach from the outlet hole, enabling rapid pressure relief and more effectively achieving an explosion-proof effect.

In some embodiments, a projection of an outermost edge of the indentation slot in the radial direction along the axial direction falls within the matching gap.

Through the above manner, when the electrode terminal fractures or bends along the indentation slot, the electrode terminal can more easily detach from the outlet hole, enabling rapid pressure relief and more effectively achieving an explosion-proof effect.

In some embodiments, in the radial direction, a radial width of the indentation slot is greater than or equal to 0.5 mm and less than or equal to 2 mm.

In the radial direction, setting the radial width of the indentation slot to be greater than or equal to 0.5 mm is conducive to promoting bending or fracturing of the first flange portion along the indentation slot when the internal pressure of the housing exceeds the pressure threshold or the temperature exceeds the temperature threshold. Setting the radial width of the indentation slot to be less than or equal to 2 mm allows the first flange portion to maintain sufficient structural strength, improving the structural stability of the battery cell.

In some embodiments, in the axial direction, an axial depth of the indentation slot is greater than or equal to 0.1 times an axial thickness of the first flange portion and less than or equal to 0.9 times the axial thickness of the first flange portion.

In the axial direction, setting the axial depth of the indentation slot to be 0.1 times the axial thickness H0 of the first flange portion is conducive to promoting bending or fracturing of the first flange portion along the indentation slot when the internal pressure of the housing exceeds the pressure threshold or the temperature exceeds the temperature threshold. Setting the axial depth of the indentation slot to be less than or equal to 0.9 times the axial thickness of the first flange portion allows the first flange portion to maintain sufficient structural strength, improving the structural stability of the battery cell.

In some embodiments, the weak region is at least partially located on the outer circumferential surface of the insertion portion.

Through the above manner, on one hand, processing of the weak region is facilitated, and on the other hand, the insertion portion is more likely to fracture along the weak region.

In some embodiments, the electrode terminal includes an insertion portion and a sealing portion connected to each other, where the insertion portion is inserted into the outlet hole along the axial direction of the electrode terminal, the insertion portion is disposed in a cylindrical shape, and the sealing portion seals an end of the insertion portion facing the interior of the housing to form a recess portion, where the weak region is disposed on the sealing portion.

Through the above manner, since the thickness of the sealing portion in the axial direction is relatively small, the weak region is more sensitive to the internal pressure of the housing, thereby more effectively achieving an explosion-proof effect. Additionally, gas inside the housing is allowed to enter the recess portion and be discharged through the recess portion.

In some embodiments, the sealing portion is welded to the insertion portion and forms a weld mark, and the weak region is located within the weld mark.

Through the above manner, the weld mark can be utilized as the weak region, simplifying the manufacturing process of the battery cell.

In some embodiments, the weak region is disposed in a ring shape around a central axis of the outlet hole.

Through the above manner, the weak region can be made more sensitive to the internal pressure of the housing, thereby better achieving an explosion-proof effect.

In some embodiments, the electrode terminal includes an insertion portion and a sealing portion connected to each other, where the insertion portion is inserted into the outlet hole along the axial direction of the electrode terminal, the insertion portion is disposed in a cylindrical shape, and the sealing portion seals an end of the insertion portion facing the interior of the housing to form a recess portion, where the battery cell includes a sealing member, the sealing member is configured to seal the recess portion, and the battery cell is electrically connected to the outside through the sealing member.

Through the above manner, sealing of the recess portion by the sealing member and electrical connection with the outside can increase a connection area between the battery cell and an external device.

In some embodiments, the recess portion is configured to inject an electrolyte into the housing.

Through the above manner, the structural complexity of the battery cell can be reduced, the occurrence of electrolyte leakage during the assembly process can be reduced, and the assembly efficiency of the battery cell can be improved.

In some embodiments, the sealing portion is provided with an electrolyte injection hole, and the electrolyte injection hole implements communication between the interior of the housing and the recess portion.

Through the above manner, sealing after the completion of electrolyte injection is facilitated, reducing the risk of electrolyte leakage.

In some embodiments, the battery cell further includes a current collecting disc and an electrode assembly disposed inside the housing, where the current collecting disc is configured to connect a tab of the electrode assembly to the electrode terminal, and a side of the sealing portion facing away from the recess portion is welded to the current collecting disc.

Through the above manner, due to the characteristic of a small thickness, the sealing portion is welded to the current collecting disc, which is conducive to achieving electrical connection between the electrode terminal and the current collecting disc from a side of the electrode terminal facing away from the current collecting disc.

In some embodiments, the battery cell includes an electrode assembly, and the housing includes a shell and an end cover, where one end of the shell has an opening, the end cover covers the opening, the shell includes a side wall and an end wall, the side wall surrounds an outer side of the electrode assembly, the end wall is disposed opposite the opening, and the wall portion is the end cover or the end wall.

Through the above manner, disposing the electrode terminal on the end cover or the end wall can improve the assembly efficiency of the battery cell and reduce the likelihood of deformation of the end cover or the end wall, facilitating the assembly of the battery cell.

In some embodiments, a melting point of a material of the electrode terminal is lower than a melting point of a material of the housing.

Through the above manner, when the electrode terminal is welded to other components, the lower melting point of the material of the electrode terminal is conducive to reducing the welding temperature, while the relatively higher melting point of the material of the housing can reduce adverse effects of the welding process on the housing, thereby reducing the risk of electrolyte leakage.

In some embodiments, a difference between the melting point of the material of the housing and the melting point of the material of the electrode terminal is greater than 300°C.

Through the above manner, when the electrode terminal is welded to other components, reduction of the welding temperature is facilitated, and adverse effects of the welding process on the housing can be reduced, thereby reducing the risk of electrolyte leakage.

In some embodiments, the material of the housing includes steel, and the material of the electrode terminal includes aluminum or copper.

Through the above manner, the material of the housing being steel allows the housing to have a lower thermal expansion coefficient and also allows the housing to have good mechanical strength. The melting point of copper or aluminum being lower than that of steel, so that the electrode terminal being made of copper or aluminum allows the electrode terminal to be more easily welded, and the copper or aluminum material facilitates processing and shaping.

According to a second aspect, this application provides a battery, where the battery includes the battery cell described above.

According to a third aspect, this application provides an electric apparatus, where the electric apparatus includes the battery described above.

The above description is only an overview of the technical solutions of this application. To enable a clearer understanding of the technical means of this application and implementation according to the contents of the specification, and to make the above and other objectives, features, and advantages of this application more apparent and understandable, specific embodiments of this application are provided below.

### BRIEF DESCRIPTION OF DRAWINGS

Through reading the detailed description of the preferred embodiments below, various other advantages and benefits will become clear to persons skilled in the art. The accompanying drawings are only for the purpose of illustrating the preferred embodiments and are not construed as a limitation on this application. Moreover, throughout the accompanying drawings, identical components are denoted by identical reference signs. In the accompanying drawings:
FIG. 1 is a schematic structural diagram of a vehicle according to one or more embodiments;
FIG. 2 is a schematic structural exploded view of a battery according to one or more embodiments;
FIG. 3 is a schematic structural cross-sectional view of a battery cell according to one or more embodiments;
FIG. 4 is a schematic structural cross-sectional view of the battery cell shown in FIG. 3 with some parts hidden;
FIG. 5 is a schematic structural bottom view of the battery cell shown in FIG. 3 with some parts hidden;
FIG. 6 is a schematic structural diagram of part A of the battery cell shown in FIG. 3 with some parts hidden;
FIG. 7 is a schematic diagram of a partial structure of a battery cell according to one or more embodiments;
FIG. 8 is a schematic diagram of a partial structure of a battery cell according to one or more embodiments;
FIG. 9 is a schematic diagram of a partial structure of a battery cell according to one or more embodiments; and
FIG. 10 is a schematic diagram of a partial structure of a battery cell according to one or more embodiments.

Reference signs in the description of embodiments are as follows:
1000a. vehicle;
100a. battery; 200a. controller; 300a. motor;
10a. box; 11a. first part; 12a. second part;
D1. radial width of indentation slot; D2. radial width of matching gap; H0. axial thickness of first flange portion; H1. axial depth of indentation slot;
1. battery cell; 100. housing; 101. wall portion; 102. outlet hole; 200. electrode terminal; 210. indentation slot; 211. weak region; 220. insertion portion; 230. first flange portion; 240. matching gap; 250. sealing portion; 260. recess portion; 270. second flange portion; 300. sealing member; 251. electrolyte injection hole; 400. current collecting disc; 500. electrode assembly; 501. tab; 110. shell; 120. end cover; 111. opening; 112. side wall; 113. end wall; 600. insulating member; and 700. weld mark.

### DESCRIPTION OF EMBODIMENTS

Embodiments of the technical solutions of this application will be described in detail below with reference to the accompanying drawings. The following embodiments are only used to illustrate the technical solutions of this application more clearly and thus are only used as examples, and are not to limit the protection scope of this application.

Unless otherwise defined, all technical and scientific terms used herein have the same meanings as commonly understood by persons skilled in the technical field of this application; terms used herein are for the purpose of describing specific embodiments only and are not intended to limit this application; terms "include", "comprise" and any variations thereof in the specification, claims, and the above description of drawings of this application are intended to cover non-exclusive inclusion.

In the description of the embodiments of this application, technical terms "first", "second", and the like are used only to distinguish between different objects and should not be construed as indicating or implying relative importance or implicitly indicating the number, specific order, or primary-secondary relationship of the indicated technical features. In the description of the embodiments of this application, "a plurality" means two or more, unless explicitly and specifically defined otherwise.

In this specification, reference to "embodiment" means that specific features, structures or characteristics described with reference to the embodiment may be incorporated in at least one embodiment of this application. Appearance of this phrase in various places in the specification does not necessarily refer to the same embodiment, nor is it an independent or alternative embodiment mutually exclusive with other embodiments. Persons skilled in the art explicitly and implicitly understand that the embodiments described herein may be combined with other embodiments.

In the descriptions of the embodiments of this application, the term "and/or" is only an associative relationship for describing associated objects, indicating that three relationships may be present. For example, A and/or B may indicate the following three cases: presence of only A, presence of both A and B, and presence of only B. Additionally, the character "/" herein generally indicates an "or" relationship between contextually associated objects.

In the description of the embodiments of this application, the term "a plurality" means two or more (including two); similarly, "a plurality of groups" means two or more groups (including two groups), and "a plurality of pieces" means two or more pieces (including two pieces).

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitation on the embodiments of this application.

In the description of embodiments of this application, unless explicitly specified and defined otherwise, technical terms "mounting" "connection" "join", "fastening", and similar terms should be understood in a general sense, for example, the connection may be a fixed connection, a detachable connection, or an integral formation; may be a mechanical connection or an electrical connection; may be a direct connection or an indirect connection through an intermediary; or may be an internal communication between two elements or an interaction relationship between two elements. Persons skilled in the art can understand the specific meanings of the above terms in the embodiments of this application based on specific circumstances.

With the development of battery technology, battery cells are applied in an increasing number of fields and are gradually replacing traditional fossil energy in the field of automotive power. Battery cells can store chemical energy and controllably convert chemical energy into electrical energy. In recyclable battery cells, after discharge, active materials can be activated through charging for continued use.

A battery cell usually includes an electrode assembly, an electrode terminal, and a housing. The electrode assembly is electrically connected to the outside through the electrode terminal. The housing can accommodate the electrode assembly and provide support for the electrode assembly. The interior of the housing can accommodate an electrolyte, and the electrolyte and active materials on the electrode assembly can generate gas, causing an increase in internal pressure of the housing, thereby resulting in a risk of explosion of the battery cell.

To reduce the risk of explosion of the battery cell, this application provides a weak region on the electrode terminal, where the weak region is configured to allow the interior of the housing to communicate with the exterior of the housing when the internal pressure of the housing exceeds a pressure threshold or the temperature exceeds a temperature threshold. Compared to disposing the weak region on the housing, disposing the weak region on the electrode terminal can reduce the likelihood of deformation of the housing, facilitating the assembly of the battery cell.

Based on the above considerations, this application provides a battery cell, a battery, and an electric apparatus. When the pressure exceeds the pressure threshold or the temperature exceeds the temperature threshold, the electrode terminal can fracture or bend along the weak region under the action of pressure or high temperature, allowing excess gas inside the housing to be discharged, thereby reducing the risk of explosion of the battery cell due to excessive internal pressure. Disposing the weak region on the insertion portion or the first flange portion can make the weak region more sensitive to the internal pressure of the housing, thereby more effectively achieving an explosion-proof effect. In this way, the risk of explosion of the battery cell can be reduced.

The battery cell, battery, and electric apparatus disclosed in the embodiments of this application can be used in electric apparatuses using a battery as a power source or in various energy storage systems using a battery as an energy storage element. The electric apparatuses may include, but are not limited to, mobile phones, tablets, laptops, electric toys, electric tools, electric bicycles, electric vehicles, ships, spacecraft, and the like. The electric toy may be a fixed or mobile electric toy, for example, a game console, an electric toy car, an electric toy ship, and an electric toy airplane. The spacecraft may include an airplane, a rocket, a space shuttle, a spaceship, and the like.

For convenience of description, an example in which an electric apparatus being a vehicle 1000a according to an embodiment of this application is used as an example for description in the following embodiments.

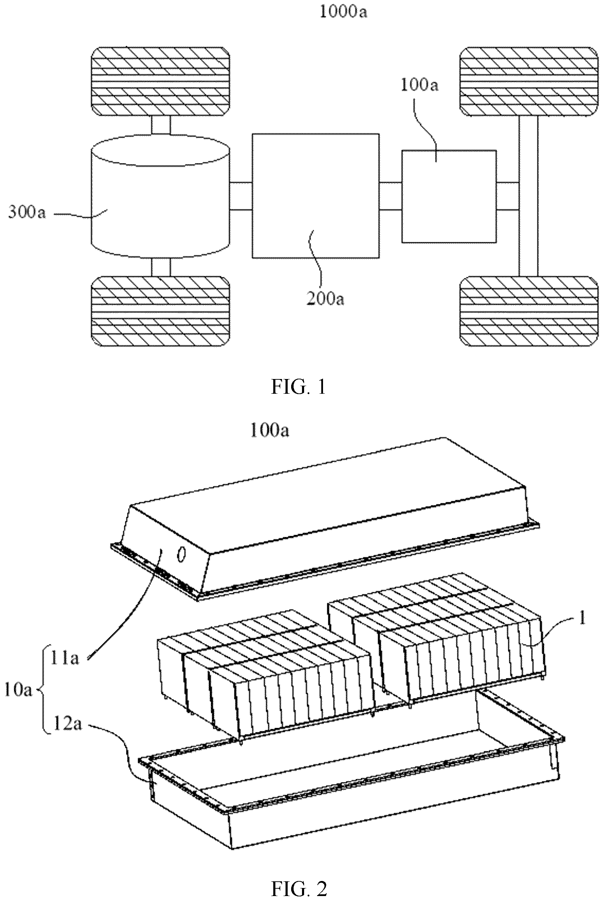

Referring to FIG. 1, a vehicle 1000a may be a fuel vehicle, a gas vehicle, or a new energy vehicle, where the new energy vehicle may be a battery electric vehicle, a hybrid vehicle, or an extended-range vehicle. A battery 100a is disposed inside the vehicle 1000a, where the battery 100a may be disposed at the bottom, front, or rear of the vehicle 1000a. The battery 100a may be used for powering the vehicle 1000a, for example, the battery 100a may serve as an operational power source for the vehicle 1000a. The vehicle 1000a may further include a controller 200a and a motor 300a, where the controller 200a is configured to control the battery 100a to supply power to the motor 300a, for example, for operational power demands during starting, navigation, and driving of the vehicle 1000a.

In some embodiments of this application, the battery 100a can not only serve as an operational power source for the vehicle 1000a but also as a driving power source for the vehicle 1000a, replacing or partially replacing fuel or natural gas to provide driving power for the vehicle 1000a.

In some embodiments, the battery 100a may be an energy storage apparatus. The energy storage apparatus includes an energy storage container, an energy storage electric cabinet, and the like.

The battery 100a mentioned in these embodiments of this application refers to a single physical module including one or more battery cells 1 to provide higher voltage and capacity.

In these embodiments of this application, a battery cell 1 may be a secondary battery, where the secondary battery refers to a battery cell that can be charged after discharge to activate active materials for continued use. Each battery cell 1 may alternatively be a primary battery.

The battery cells 1 include, but are not limited to, lithium-ion batteries, sodium-ion batteries, sodium-lithium-ion batteries, lithium metal batteries, sodium metal batteries, lithium-sulfur batteries, magnesium-ion batteries, nickel-metal hydride batteries, nickel-cadmium batteries, lead-acid batteries, and the like. The battery cell 1 may be cylindrical, flat, cuboidal, or in other shapes.

In some embodiments, the battery 100a may be a battery module, and when there are a plurality of battery cells 1, the plurality of battery cells 1 are arranged and fixed to form a battery module.

In some embodiments, referring to FIG. 2, the battery 100a may be a battery pack, where the battery pack includes a box 10a and a battery cell 1, and the battery cell 1 or a battery module is accommodated in the box 10a.

In some embodiments, the box 10a may serve as a part of a chassis structure of the vehicle 1000a. For example, a portion of the box 10a may become at least a part of a floor of the vehicle 1000a, or a portion of the box 10a may become at least a part of cross beams and longitudinal beams of the vehicle 1000a.

Referring to FIG. 2, the battery 100a includes a box 10a and a battery cell 1, where the battery cell 1 is accommodated in the box 10a. The box 10a is configured to provide an accommodating space for the battery cell 1, and the box 10a can adopt various structures. In some embodiments, the box 10a may include a first part 11a and a second part 12a, where the first part 11a and the second part 12a cover each other, and the first part 11a and the second part 12a jointly define an accommodating space for accommodating the battery cell 1. The second part 12a may be a hollow structure with an opening at one end, the first part 11a may be a plate-like structure, and the first part 11a covers an opening side of the second part 12a, so that the first part 11a and the second part 12a jointly define the accommodating space. The first part 11a and the second part 12a may alternatively both be hollow structures with an opening on one side, where the opening side of the first part 11a covers the opening side of the second part 12a. Certainly, the box 10a formed by the first part 11a and the second part 12a can have various shapes, such as a cylinder, a cuboid, and the like.

In the battery 100a, there may be a plurality of battery cells 1, where the plurality of battery cells 1 may be connected in series, in parallel, or in series-parallel. Being connected in series-parallel means a combination of both series connection and parallel connection of the plurality of battery cells 1. The plurality of battery cells 1 may be directly connected in series, in parallel, or in series-parallel, and then an entirety formed by the plurality of battery cells 1 is accommodated in the box 10a. Certainly, the battery 100a may alternatively formed in a manner that the plurality of battery cells 1 are first connected in series, in parallel, or in series-parallel to form a battery module, and then a plurality of battery modules are connected in series, in parallel, or in series-parallel to form an entirety accommodated in the box 10a. The battery 100a may further include other structures, for example, the battery 100a may further include a busbar component configured to achieve electrical connection between the plurality of battery cells 1.

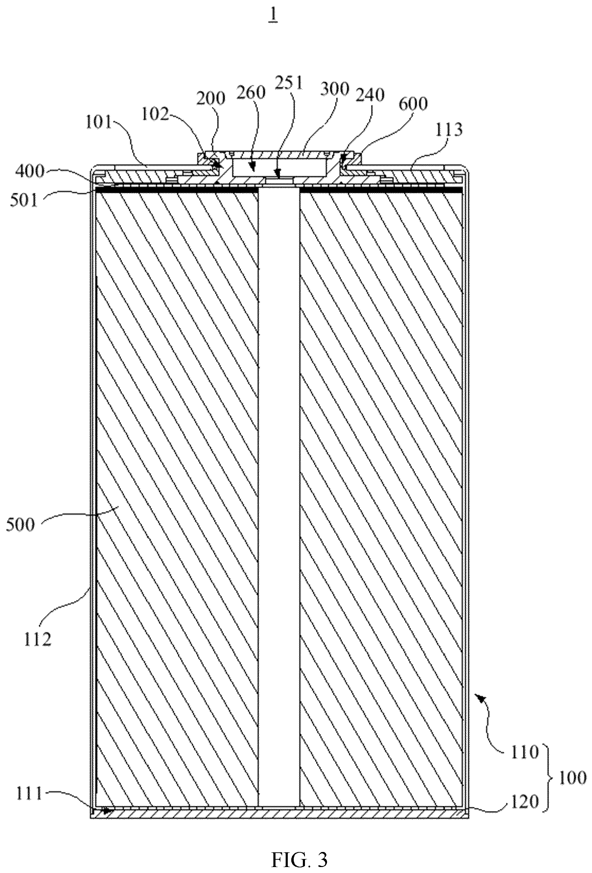

Referring to FIG. 3, the battery cell 1 refers to a smallest unit constituting the battery 100a. In this embodiment, a cylindrical battery cell 1 is taken as an example for description. The battery cell 1 includes a housing 100, an electrode assembly 500, and other functional components.

In some embodiments, the housing 100 is configured to encapsulate the electrode assembly 500, an electrolyte, and other components. The housing 100 may be a steel shell, an aluminum shell, a plastic shell (such as polypropylene), a composite metal shell (such as a copper-aluminum composite shell), an aluminum-plastic film, or the like.

The housing 100 may include an end cover 120 and a shell 110. The end cover 120 refers to a component that covers an opening 111 of the shell 110 to isolate an internal environment of the battery cell 1 from an external environment. Without limitation, the end cover 120 may adapt to the shell 110 in shape to fit with the shell 110. Optionally, the end cover 120 may be made of a material with specified hardness and strength (for example, aluminum alloy), so that the end cover 120 is not prone to deformation when subjected to compression and collision, allowing the battery cell 1 to have higher structural strength and improved safety performance. The end cover 120 may be provided with functional components such as an electrode terminal 200. The electrode terminal 200 may be configured to be electrically connected to the electrode assembly 500 for outputting or inputting electrical energy of the battery cell 1. In some embodiments, the end cover 120 may further be provided with a pressure relief mechanism configured to release internal pressure when an internal pressure or temperature of the battery cell 1 reaches a threshold. The end cover 120 may be made of various materials, for example, including but not limited to copper, iron, aluminum, stainless steel, aluminum alloy, plastic, and the like. In some embodiments, an insulating member may further be provided on an inner side of the end cover 120, where the insulating member may be configured to isolate electrical connection components within the shell 110 from the end cover 120 to reduce a risk of short circuits. For example, the insulating member may be made of plastic, rubber, or the like.

The shell 110 is a component configured to fit with the end cover 120 to form an internal environment of the battery cell 1, where the formed internal environment can be used for accommodating the electrode assembly 500, an electrolyte, and other components. The shell 110 and the end cover 120 may be separate components, where an opening 111 may be provided on the shell 110, and at the opening 111, the end cover 120 covers the opening 111 to form the internal environment of the battery cell 1. Without limitation, the end cover 120 and the shell 110 may also be integrated. Specifically, the end cover 120 and the shell 110 may form a shared connection surface before other components are placed into the shell, and when the interior of the shell 110 needs to be sealed, the end cover 120 is made to cover the shell 110. The shell 110 may have various shapes and sizes, such as a cuboid shape, a cylindrical shape, and a hexagonal prism shape. Specifically, the shape of the shell 110 may be determined based on a specific shape and size of the electrode assembly 500. The shell 110 may be made of various materials, for example, including but not limited to copper, iron, aluminum, stainless steel, aluminum alloy, plastic, and the like.

The electrode assembly 500 is a component in the battery cell 1 where electrochemical reactions take place. The shell 110 may contain one or more electrode assemblies 500.

In some embodiments, the electrode assembly 500 includes a positive electrode, a negative electrode, and a separator. During charging and discharging of the battery cell, active ions (such as lithium ions) intercalate and deintercalate back and forth between the positive electrode and the negative electrode. The separator is disposed between the positive electrode and the negative electrode to prevent short circuit of the positive electrode and negative electrode and to allow the active ions to pass through.

In some embodiments, the positive electrode may be a positive electrode plate, and the positive electrode plate may include a positive electrode current collector and a positive electrode active material disposed on at least one surface of the positive electrode current collector.

In an example, the positive electrode current collector includes two opposite surfaces in a thickness direction of the positive electrode current collector, and the positive electrode active material is disposed on either or both of the two opposite surfaces of the positive electrode current collector.

In an example, the positive electrode current collector may be a metal foil current collector or a composite current collector. For example, a metal foil may use silver surface-treated aluminum or stainless steel, stainless steel, copper, aluminum, nickel, baked carbon, carbon, nickel, titanium, or the like. A composite current collector may include a polymer material substrate and a metal layer. The composite current collector may be formed by forming a metal material (aluminum, aluminum alloy, nickel, nickel alloy, titanium, titanium alloy, silver, silver alloy, or the like) on a polymer material substrate (for example, a substrate of polypropylene, polyethylene terephthalate, polybutylene terephthalate, polystyrene, or polyethylene).

In an example, the positive electrode active material may include at least one of the following materials: lithium-containing phosphate, lithium transition metal oxide, and respective modified compounds thereof. However, this application is not limited to these materials, and may alternatively use other conventional materials that can be used as positive electrode active materials for batteries. One of these positive electrode active materials may be used alone, or more than two of them may be used in combination. Examples of the lithium-containing phosphate may include, but are not limited to, at least one of lithium iron phosphate (such as LiFePO₄ (also abbreviated as LFP)), a composite material of lithium iron phosphate and carbon, lithium manganese phosphate (such as LiMnPO₄), a composite material of lithium manganese phosphate and carbon, lithium iron manganese phosphate, and a composite material of lithium iron manganese phosphate and carbon. Examples of the lithium transition metal oxide may include, but are not limited to, at least one of lithium cobalt oxide (such as LiCoO₂), lithium nickel oxide (such as LiNiO₂), lithium manganese oxide (such as LiMnO₂, LiMn2O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (also abbreviated as NCM333), LiNi_{0.5}Co_{0.2}Mn_{0.3}O₂ (also abbreviated as NCM523), LiNi_{0.5}Co_{0.25}Mn_{0.25}O₂ (also abbreviated as NCM211), LiNi_{0.6}Co_{0.2}Mn_{0.2}O₂ (also abbreviated as NCM622), LiNi_{0.8}Co_{0.1}Mn_{0.1}O₂ (also abbreviated as NCM811), lithium nickel cobalt aluminum oxide (such as LiNi_{0.85}Co_{0.15}Al_{0.05}O₂), and modified compounds thereof.

In some embodiments, the negative electrode can be a negative electrode plate, and the negative electrode plate can include a negative electrode current collector.

In an example, the negative electrode current collector may be a metal foil current collector, a foam metal current collector, or a composite current collector. For example, a metal foil may use silver surface-treated aluminum or stainless steel, stainless steel, copper, aluminum, nickel, baked carbon, carbon, nickel, titanium, or the like. A foam metal may be foam nickel, foam copper, foam aluminum, foam alloy, foam carbon, or the like. A composite current collector may include a polymer material substrate and a metal layer. The composite current collector may be formed by forming a metal material (copper, copper alloy, nickel, nickel alloy, titanium, titanium alloy, silver, silver alloy, or the like) on a polymer material substrate (for example, a substrate of polypropylene, polyethylene terephthalate, polybutylene terephthalate, polystyrene, or polyethylene).

In an example, the negative electrode plate may include a negative electrode current collector and a negative electrode active material disposed on at least one surface of the negative electrode current collector.

In an example, the negative electrode current collector has two opposite surfaces in a thickness direction of the negative electrode current collector, and the negative electrode active material is disposed on either or both of the two opposite surfaces of the negative electrode current collector.

In an example, the negative electrode active material may adopt negative electrode active materials well known in the art for battery cells. In an example, the negative electrode active material may include at least one of the following materials: artificial graphite, natural graphite, soft carbon, hard carbon, silicon-based material, tin-based material, and lithium titanate. The silicon-based material may be selected from at least one of elemental silicon, silicon-oxygen compound, silicon-carbon composite, silicon-nitrogen composite, or silicon alloy. The tin-based material may be selected from at least one of elemental tin, tin-oxygen compound, or tin alloy. However, this application is not limited to these materials, and other conventional materials that can be used as negative electrode active materials for batteries can also be used. One of these negative electrode active materials may be used alone or, more than two of them may be used in combination.

In some embodiments, a material of the positive electrode current collector may be aluminum, and a material of the negative electrode current collector may be copper.

In some embodiments, the electrode assembly 500 further includes a separator, where the separator is disposed between the positive electrode and the negative electrode.

In some embodiments, the separator is an isolating film. The separator is not limited to any particular type in this application, and may be any well-known porous separator with good chemical stability and mechanical stability.

In an example, major materials of the isolating film may be selected from at least one of glass fiber, non-woven fabric, polyethylene, polypropylene, polyvinylidene fluoride, or ceramics. The separator may be a single-layer film or a multi-layer composite film, and is not particularly limited. When the isolating film is a multi-layer composite film, materials of the layers may be the same or different, without particular limitation. The isolating film may be an independent component located between the positive electrode and the negative electrode, or may be attached to surfaces of the positive electrode and the negative electrode.

In some embodiments, the separator is a solid electrolyte. The solid electrolyte is disposed between the positive electrode and the negative electrode, and plays the roles of transporting ions and isolating the positive electrode from the negative electrode.

In some embodiments, the battery cell further includes an electrolyte, where the electrolyte conducts ions between the positive and negative electrodes. This application has no specific limitation on a type of the electrolyte, which may be selected according to needs. The electrolyte may be liquid, gel, or solid.

A liquid electrolyte includes an electrolytic salt and a solvent.

In some embodiments, the electrolytic salt may be at least one selected from lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro(bisoxalato)phosphate, and lithium tetrafluoro(oxalato)phosphate.

In some embodiments, the solvent may be at least one selected from ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methanesulfonate, and diethyl sulfone. The solvent may alternatively be selected from ether solvents. The ether solvents may include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyl tetrahydrofuran, diphenyl ether, and crown ether.

A gel electrolyte includes a polymer as a skeleton network of the electrolyte, paired with an ionic liquid-lithium salt.

A solid electrolyte includes a polymer solid electrolyte, an inorganic solid electrolyte, and a composite solid electrolyte.

In an example, the polymer solid electrolyte may be polyether (polyethylene oxide), polysiloxane, polycarbonate, polyacrylonitrile, polyvinylidene fluoride, polymethyl methacrylate, a single-ion polymer, a polyionic liquid-lithium salt, cellulose, or the like.

In an example, the inorganic solid electrolyte may be one or more of an oxide solid electrolyte (crystalline perovskite, sodium superionic conductor, garnet, amorphous LiPON film), a sulfide solid electrolyte (crystalline lithium superionic conductor (lithium germanium phosphorus sulfur, argyrodite), amorphous sulfide), a halide solid electrolyte, a nitride solid electrolyte, and a hydride solid electrolyte.

In an example, the composite solid electrolyte is formed by adding an inorganic solid electrolyte filler to a polymer solid electrolyte.

In some embodiments, the electrode assembly 500 is a wound structure. The positive electrode plate and the negative electrode plate are wound into a wound structure.

In some embodiments, the electrode assembly 500 is provided with a tab 501, where the tab can conduct current out of the electrode assembly 500. The tab includes a positive tab and a negative tab. The positive tab and the negative tab may both be located at one end of a main body or be separately located at two ends of the main body. During charging and discharging of the battery 100a, the positive electrode active material and the negative electrode active material react with the electrolyte, and the tab 501 is connected to the electrode terminal to form a current loop.

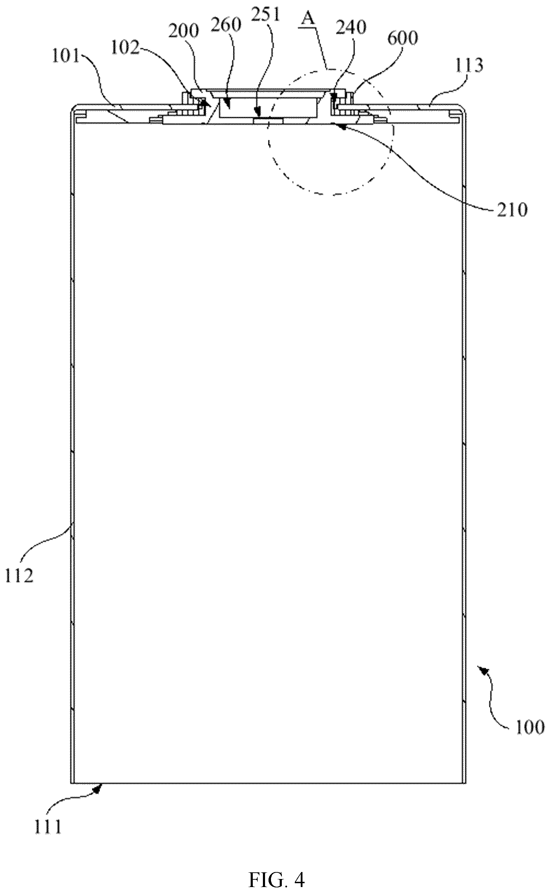

According to some embodiments of this application, as shown in FIG. 3 to FIG. 5, the battery cell 1 of this application includes a housing 100 and an electrode terminal 200. The housing 100 includes a wall portion 101, where the wall portion 101 is provided with an outlet hole 102. The electrode terminal 200 is disposed at the outlet hole 102, where the electrode terminal 200 is provided with a weak region 211, and the weak region 211 is configured to be ruptured when an internal pressure of the housing 100 exceeds a pressure threshold or a temperature exceeds a temperature threshold, allowing the interior of the housing 100 to communicate with the exterior of the housing 100.

By being inserted into the outlet hole 102, the electrode terminal 200 can be mounted to the housing 100. Specifically, one end of the electrode terminal 200 is disposed toward the interior of the housing 100 and can be configured to be electrically connected to an electrode assembly 500 disposed within the housing 100. Another end of the electrode terminal 200 is disposed toward an exterior of the housing 100 and can be connected to the outside, thereby enabling charging and discharging of the electrode assembly 500.

The interior of the housing 100 can accommodate an electrolyte and active materials, where the electrolyte and active materials can generate gas, causing an increase in internal pressure of the housing 100. Continuous accumulation of gas can cause the internal pressure of the housing 100 to rise beyond the pressure threshold. By providing the weak region 211 on the electrode terminal 200, when the pressure exceeds the pressure threshold or the temperature exceeds the temperature threshold, the weak region 211 is ruptured, allowing the interior of the housing 100 to communicate with the exterior of the housing 100, and excess gas inside the housing 100 can be discharged.

When energy release of the battery cell 1 is excessively rapid, the temperature inside the housing 100 often rises, and high temperature can promote an increase in pressure. When the temperature exceeds the temperature threshold, the weak region 211 can be ruptured, helping to mitigate the pressure increase inside the housing 100.

Such an arrangement can suppress the continuous increase in internal pressure of the housing 100, reducing the risk of explosion of the battery cell 1.

Optionally, the weak region 211 may be ruptured due to a pressure exceeding a load that the weak region 211 can withstand. The weak region 211 may also be ruptured due to high temperature, for example, due to a decrease in strength of the weak region 211 caused by high temperature, or due to melting or deformation of the weak region 211 caused by high temperature.

In some embodiments, the electrode terminal 200 may completely fracture along the weak region 211, and the fractured portion moves away from the interior of the housing 100 under the action of internal pressure of the housing 100. In some other embodiments, the electrode terminal 200 may partially fracture along the weak region 211, and the fractured portion bends away from the interior of the housing 100 under the action of internal pressure of the housing 100.

If the weak region 211 is disposed on the housing 100, for example, on the wall portion 101, the structural strength of the housing 100 may be weakened, reducing the ability of the housing 100 to withstand loads, making the housing 100 prone to deformation under force, which is not conducive to the assembly of the battery cell 1. For example, the housing 100 can have a role in supporting the electrode assembly 500, and deformation of the housing 100 would make it inconvenient to assemble the electrode assembly 500. Therefore, disposing the weak region 211 on the electrode terminal 200 can reduce the likelihood of deformation of the housing 100, facilitating the assembly of the battery cell 1.

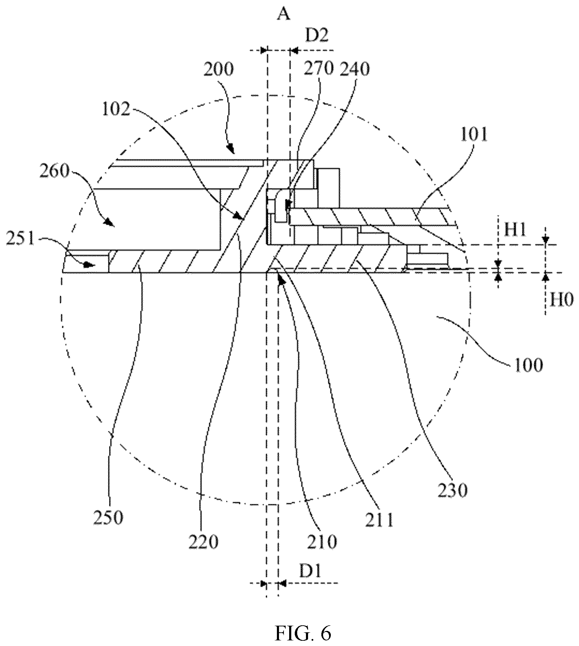

According to some embodiments of this application, optionally, as shown in FIG. 6, the electrode terminal 200 is provided with an indentation slot 210, and the weak region 211 forms the bottom of the indentation slot 210.

The weak region 211 can be formed on the electrode terminal 200 by forming the indentation slot 210. When the pressure exceeds the pressure threshold or the temperature exceeds the temperature threshold, the electrode terminal 200 can fracture or bend along the indentation slot 210 under the action of pressure or high temperature, allowing excess gas inside the housing 100 to be discharged, thereby reducing the risk of explosion of the battery cell 1 due to excessive internal pressure.

According to some embodiments of this application, optionally, as shown in FIG. 6, the electrode terminal 200 includes an insertion portion 220 and a first flange portion 230 connected to each other, where the insertion portion 220 is inserted into the outlet hole 102 along an axial direction of the electrode terminal 200, and in a radial direction of the electrode terminal 200, an outer circumferential surface of the first flange portion 230 at least partially extends beyond an outer circumferential surface of the insertion portion 220, and a portion of the first flange portion 230 disposed at the periphery of the outlet hole 102 is supported on a side of the wall portion 101 facing the interior of the housing 100, where the weak region 211 is disposed on the insertion portion 220 and/or the first flange portion 230.

The axial direction of the electrode terminal 200 refers to a direction of spacing between an end facing the interior of the housing 100 and an end facing away from the interior of the housing 100, while the radial direction of the electrode terminal 200 refers to a direction perpendicular to the axial direction of the electrode terminal 200. Unless otherwise specified, the axial and radial directions mentioned below refer to the axial and radial directions of the electrode terminal 200.

By inserting the insertion portion 220 into the outlet hole 102 along the axial direction of the electrode terminal 200, installation of the electrode terminal 200 can be achieved. By supporting the first flange portion 230 on the wall portion 101, connection stability between the electrode terminal 200 and the wall portion 101 can be improved. In the radial direction of the electrode terminal 200, by setting the outer circumferential surface of the first flange portion 230 to at least partially extend beyond the outer circumferential surface of the insertion portion 220 and disposing the first flange portion 230 inside the housing 100, the wall portion 101 can form a barrier to the first flange portion 230, thereby restricting the electrode terminal 200 from detaching from the interior of the housing 100.

The weak region 211 may be disposed on the insertion portion 220, on the first flange portion 230, or on both the insertion portion 220 and the first flange portion 230. By disposing the weak region 211 on the insertion portion 220, when the internal pressure of the housing 100 exceeds the pressure threshold or the temperature exceeds the temperature threshold, the insertion portion 220 can fracture or bend along the weak region 211, allowing excess gas inside the housing 100 to be discharged. By disposing the weak region 211 on the first flange portion 230, when the internal pressure of the housing 100 exceeds the pressure threshold or the temperature exceeds the temperature threshold, the first flange portion 230 can fracture or bend along the weak region 211, allowing excess gas inside the housing 100 to be discharged.

Since the pressure inside the housing 100 exerts a relatively large force on the insertion portion 220 and the first flange portion 230, disposing the weak region 211 on the insertion portion 220 or the first flange portion 230 can make the weak region 211 more sensitive to the internal pressure of the housing 100, thereby more effectively achieving an explosion-proof effect.

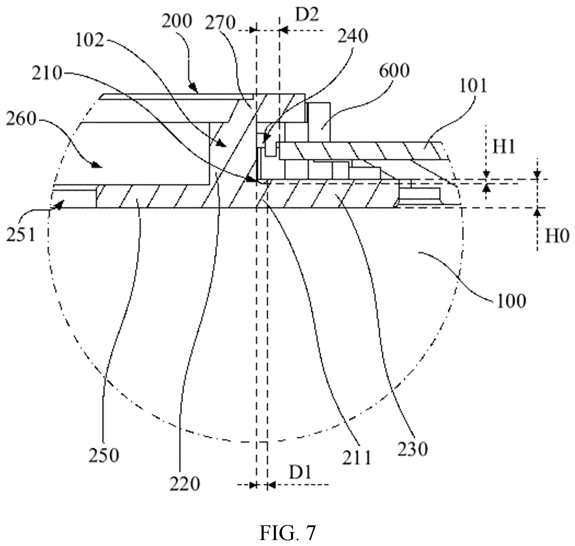

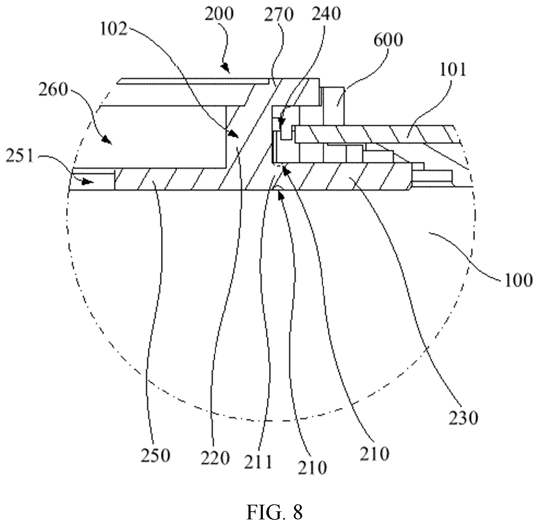

According to some embodiments of this application, optionally, as shown in FIG. 6 to FIG. 8, the electrode terminal 200 is provided with an indentation slot 210, where the weak region 211 forms the bottom of the indentation slot 210, and the indentation slot 210 is disposed on a side surface of the first flange portion 230 facing and/or facing away from the wall portion 101.

The side surface of the first flange portion 230 facing the wall portion 101 and the side surface of the first flange portion 230 facing away from the wall portion 101 may be spaced apart along the axial direction. The indentation slot 210 may be disposed on the side surface of the first flange portion 230 facing the wall portion 101, on the side surface of the first flange portion 230 facing away from the wall portion 101, or on both the side surface of the first flange portion 230 facing the wall portion 101 and the side surface of the first flange portion 230 facing away from the wall portion 101. The weak region 211 can be formed by the indentation slot 210.

Such an arrangement, on one hand, facilitates processing of the indentation slot 210, and on the other hand, since the thickness of the first flange portion 230 in the axial direction is generally relatively small, the indentation slot 210 is more sensitive to the internal pressure of the housing 100, thereby more effectively achieving an explosion-proof effect. When the internal pressure of the housing 100 exceeds the pressure threshold or the temperature exceeds the temperature threshold, the first flange portion 230 can fracture or bend along the indentation slot 210 in the axial direction to achieve the explosion-proof function of the indentation slot 210.

Further, in the radial direction, the first flange portion 230 and the insertion portion 220 partially overlap and are connected, and the indentation slot 210 may be disposed on a portion of the first flange portion 230 that does not overlap with the insertion portion 220, facilitating the implementation of the explosion-proof function of the indentation slot 210.

According to some embodiments of this application, optionally, as shown in FIG. 6, the indentation slot 210 is at least partially disposed opposite a matching gap 240 between an outer circumferential surface of the insertion portion 220 and a wall of the outlet hole 102 along the axial direction.

The indentation slot 210 is at least partially disposed opposite the matching gap 240 along the axial direction, so that when the electrode terminal 200 fractures or bends along the indentation slot 210, the electrode terminal 200 is not obstructed by the wall portion 101 and can detach from the outlet hole 102 more easily, enabling rapid pressure relief and more effectively achieving an explosion-proof effect.

Further, the battery cell 1 includes an insulating member 600, where the insulating member 600 is configured to fill the matching gap 240, providing insulation and sealing effects. When the internal pressure of the housing 100 exceeds the pressure threshold or the temperature exceeds the temperature threshold, the electrode terminal 200 can fracture or bend along the indentation slot 210, loosening the filling of the insulating member 600 in the matching gap 240, thereby allowing gas to be discharged from the matching gap 240.

According to some embodiments of this application, optionally, as shown in FIG. 6, in the radial direction, a radial width D2 of the matching gap 240 is greater than a radial width D1 of the indentation slot 210.

By setting the radial width D2 of the matching gap 240 to be greater than the radial width D1 of the indentation slot 210 in the radial direction, when the electrode terminal 200 fractures or bends along the indentation slot 210, the electrode terminal 200 can more easily detach from the outlet hole 102, enabling rapid pressure relief and more effectively achieving an explosion-proof effect.

Specifically, when the internal pressure of the housing 100 exceeds the pressure threshold or the temperature exceeds the temperature threshold, the first flange portion 230 can split along the indentation slot 210 in the axial direction to form a communication groove running through the first flange portion 230. After the communication groove is formed, gas accumulated inside the housing 100 can be discharged sequentially through the communication groove and the matching gap 240.

According to some embodiments of this application, optionally, as shown in FIG. 6, a projection of an outermost edge of the indentation slot 210 in the radial direction along the axial direction falls within the matching gap 240.

In the radial direction, the indentation slot 210 and the matching gap 240 can partially overlap. When the internal pressure of the housing 100 exceeds the pressure threshold or the temperature exceeds the temperature threshold, the first flange portion 230 is subjected to pressure, where the pressure exerts a force on the housing 100 in a direction facing away from the interior of the housing 100, and the bottom of the indentation slot 210 can deform away from the interior of the housing 100 until the first flange portion 230 fractures or bends along the indentation slot 210.

The projection of the outermost edge of the indentation slot 210 in the radial direction along the axial direction is set to fall within the matching gap 240, so that when the bottom of the indentation slot 210 deforms, the wall portion 101 can provide avoidance through the matching gap 240. When the electrode terminal 200 fractures or bends along the indentation slot 210, the electrode terminal 200 can more easily detach from the outlet hole 102, enabling rapid pressure relief and more effectively achieving an explosion-proof effect.

Further, a projection of an innermost edge of the indentation slot 210 in the radial direction along the axial direction can fall within the matching gap 240 or outside the matching gap 240.

According to some embodiments of this application, optionally, in the radial direction, a radial width D1 of the indentation slot 210 is greater than or equal to 0.5 mm and less than or equal to 2 mm. For example, the radial width D1 of the indentation slot 210 may be set to 0.6 mm, 0.8 mm, 1.0 mm, 1.4 mm, 1.6 mm, or the like.

In the radial direction, by setting the radial width D1 of the indentation slot 210 to be greater than or equal to 0.5 mm, bending or fracturing of the first flange portion 230 along the indentation slot 210 is facilitated when the internal pressure of the housing 100 exceeds the pressure threshold or the temperature exceeds the temperature threshold. By setting the radial width D1 of the indentation slot 210 to be less than or equal to 2 mm, the first flange portion 230 can maintain sufficient structural strength, enhancing the structural stability of the battery cell 1.

According to some embodiments of this application, optionally, in the axial direction, an axial depth H1 of the indentation slot 210 is greater than or equal to 0.1 times an axial thickness H0 of the first flange portion 230 and less than or equal to 0.9 times the axial thickness H0 of the first flange portion 230. For example, the axial depth H1 of the indentation slot 210 may be equal to 0.1 times, 0.2 times, 0.3 times, 0.5 times, or 0.7 times the axial thickness H0 of the first flange portion 230. In another example, when the axial thickness H0 of the first flange portion 230 is equal to 1 mm, the radial width D1 of the indentation slot 210 may be set to 0.2 mm, 0.4 mm, 0.5 mm, 0.6 mm, 0.8 mm, or the like.

In the axial direction, by setting the axial depth H1 of the indentation slot 210 to be 0.1 times the axial thickness H0 of the first flange portion 230, bending or fracturing of the first flange portion 230 along the indentation slot 210 is facilitated when the internal pressure of the housing 100 exceeds the pressure threshold or the temperature exceeds the temperature threshold. By setting the axial depth H1 of the indentation slot 210 to be less than or equal to 0.9 times the axial thickness H0 of the first flange portion 230, the first flange portion 230 can maintain sufficient structural strength, facilitating enhancement of the structural stability of the battery cell 1.

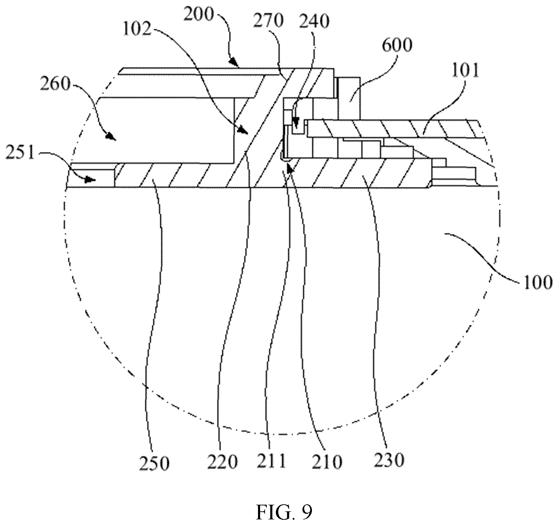

According to some embodiments of this application, optionally, as shown in FIG. 9, the weak region 211 is at least partially located on an outer circumferential surface of the insertion portion 220.

Such an arrangement, on one hand, facilitates processing of the weak region 211, and on the other hand, makes the insertion portion 220 more likely to fracture along the weak region 211.

When the internal pressure of the housing 100 exceeds the pressure threshold or the temperature exceeds the temperature threshold, the insertion portion 220 can fracture or bend from the outer circumferential surface along the weak region 211, reducing the risk of explosion of the battery cell 1.

For example, the weak region 211 may be formed at the bottom of the indentation slot 210, where an opening of the indentation slot 210 may be provided on the outer circumferential surface of the insertion portion 220, and the weak region 211 may be located on the first flange portion 230. When the internal pressure of the housing 100 exceeds the pressure threshold or the temperature exceeds the temperature threshold, the insertion portion 220 and the weak region 211 can synchronously fracture or bend along the indentation slot 210.

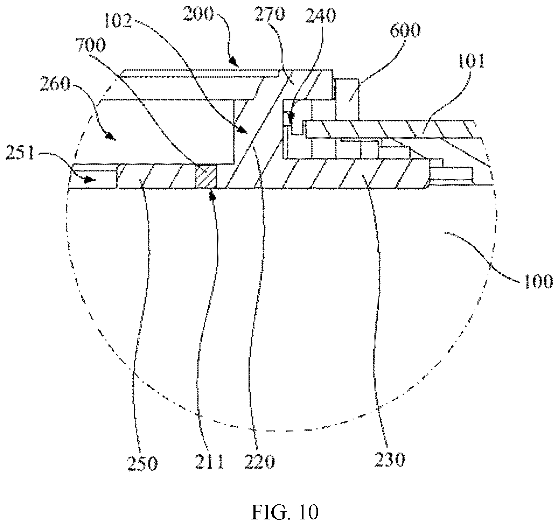

According to some embodiments of this application, optionally, as shown in FIG. 10, the electrode terminal 200 includes an insertion portion 220 and a sealing portion 250 connected to each other, where the insertion portion 220 is inserted into the outlet hole 102 along the axial direction of the electrode terminal 200, the insertion portion 220 is disposed in a cylindrical shape, and the sealing portion 250 seals an end of the insertion portion 220 facing the interior of the housing 100 to form a recess portion 260, where the weak region 211 is disposed on the sealing portion 250.

The recess portion 260 may be formed on a side of the sealing portion 250 facing away from the interior of the housing 100. When disposed on a side surface of the sealing portion 250 facing the recess portion 260, the weak region 211 can communicate with the recess portion 260.

The weak region 211 may be disposed on the side surface of the sealing portion 250 facing the recess portion 260, on a side surface of the sealing portion 250 facing away from the recess portion 260, or on both the side surface of the sealing portion 250 facing the recess portion 260 and the side surface of the sealing portion 250 facing away from the recess portion 260.

The side surface of the sealing portion 250 facing the recess portion 260 and the side surface of the sealing portion 250 facing away from the recess portion 260 may be spaced apart along the axial direction. By disposing the weak region 211 on the side surface of the sealing portion 250 facing and/or facing away from the recess portion 260, when the internal pressure of the housing 100 exceeds the pressure threshold or the temperature exceeds the temperature threshold, the sealing portion 250 can fracture or bend along the weak region 211, allowing gas inside the housing 100 to enter the recess portion 260 and be discharged through the recess portion 260.

By providing the recess portion 260, a thickness of the sealing portion 250 in the axial direction may be less than a thickness of the insertion portion 220. Since the thickness of the sealing portion 250 in the axial direction is relatively small, the weak region 211 is more sensitive to the internal pressure of the housing 100, thereby more effectively achieving an explosion-proof effect.

According to some embodiments of this application, optionally, as shown in FIG. 10, the sealing portion 250 is welded to the insertion portion 220 and forms a weld mark 700, and the weak region 211 is located within the weld mark 700.

The weld mark 700 may be utilized as the weak region 211 by controlling the welding process, and the weak region 211 may be ruptured when the internal pressure of the housing 100 exceeds the pressure threshold or the temperature exceeds the temperature threshold. Such an arrangement can simplify the manufacturing process of the battery cell 1.

In some embodiments, the battery cell 1 further includes a current collecting disc 400 disposed inside the housing 100. After the sealing portion 250 is welded to the current collecting disc 400, a weld mark 700 is formed, and the sealing portion 250 is electrically connected to the current collecting disc 400 through the weld mark 700. After the internal pressure of the housing 100 exceeds the pressure threshold or the temperature exceeds the temperature threshold, the sealing portion 250 can fracture along the weak region 211, thereby breaking a current loop between the electrode terminal 200 and the electrode assembly 500, delaying electrical energy release.

In some other embodiments, the weak region 211 is disposed on the sealing portion 250 and surrounds the weld mark 700. Such an arrangement allows the sealing portion 250 to fracture along the weak region 211 after the internal pressure of the housing 100 exceeds the pressure threshold or the temperature exceeds the temperature threshold, thereby breaking a current loop between the electrode terminal 200 and the electrode assembly 500, delaying electrical energy release.

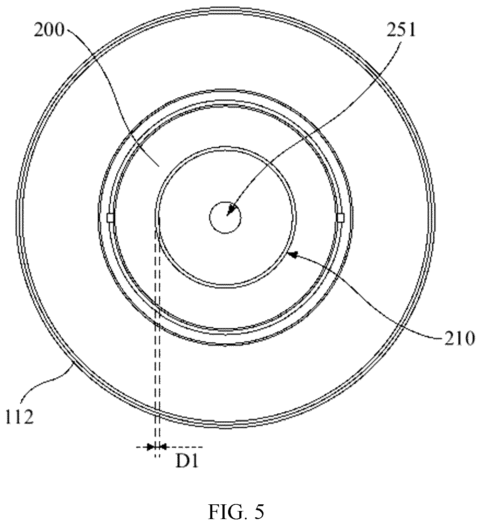

According to some embodiments of this application, optionally, as shown in FIG. 5, the weak region 211 is disposed in a ring shape around a central axis of the outlet hole 102.

Such an arrangement can make the weak region 211 more sensitive to the internal pressure of the housing 100, thereby better achieving an explosion-proof effect. Specifically, after the internal pressure of the housing 100 exceeds the pressure threshold or the temperature exceeds the temperature threshold, the electrode terminal 200 can fracture along the weak region 211. In the radial direction, a portion of the electrode terminal 200 located inside the weak region 211 and a portion located outside the weak region 211 may be separated from each other. Alternatively, the portion of the electrode terminal 200 located inside the weak region 211 may bend away from the interior of the housing 100.

According to some embodiments of this application, optionally, as shown in FIG. 3 and FIG. 6, the electrode terminal 200 includes an insertion portion 220 and a sealing portion 250 connected to each other, where the insertion portion 220 is inserted into the outlet hole 102 along the axial direction of the electrode terminal 200, the insertion portion 220 is disposed in a cylindrical shape, and the sealing portion 250 seals an end of the insertion portion 220 facing the interior of the housing 100 to form a recess portion 260, where the battery cell 1 includes a sealing member 300, and the sealing member 300 is configured to seal the recess portion 260. The battery cell 1 is electrically connected to the outside through the sealing member 300.

By providing the sealing member 300 to seal the recess portion 260, the sealing member 300 can be configured to increase a connection area between the battery cell 1 and an external device and mitigate leakage of an electrolyte inside the battery cell 1.

Specifically, by fixedly connecting the sealing member 300 to the electrode terminal 200, a current loop can be formed between the electrode assembly 500, the electrode terminal 200, and the sealing member 300. The electrode assembly 500 may be electrically connected to the outside sequentially through the electrode terminal 200 and the sealing member 300. For example, the battery cell 1 may be connected to a busbar (busbar) through the sealing member 300. The busbar (busbar) is a connection bar, which is a multi-layer composite structure and can be connected to a plurality of battery cells 1 in series or in parallel through welding or bolts.

Further, an end of the electrode terminal 200 facing away from the interior of the housing 100 may be provided with a second flange portion 270, where an opening of the recess portion 260 is located at the second flange portion 270, and the sealing member 300 may be connected to the second flange portion 270 to seal the recess portion 260, allowing the electrode terminal 200 to be electrically connected to the outside through the sealing member 300. The wall portion 101 may be limited between the first flange portion 230 and the second flange portion 270 to restrict relative movement between the electrode terminal 200 and the housing 100.

According to some embodiments of this application, optionally, as shown in FIG. 3, the recess portion 260 is configured to inject an electrolyte into the housing 100.

During a production process of the battery cell 1, the recess portion 260 can communicate with the interior of the housing 100, allowing an electrolyte to be injected into the housing 100 through the recess portion 260. By providing the recess portion 260, after the electrode terminal 200 and the housing 100 are assembled and connected, the recess portion 260 can be utilized for injection of the electrolyte, and then the sealing member 300 is utilized for sealing, reducing the structural complexity of the battery cell 1, reducing the occurrence of electrolyte leakage during the assembly process, and improving the assembly efficiency of the battery cell 1.

According to some embodiments of this application, optionally, as shown in FIG. 3, the sealing portion 250 is provided with an electrolyte injection hole 251, where the electrolyte injection hole 251 implements communication between the interior of the housing 100 and the recess portion 260.

During an assembly process of the battery cell 1, when the electrolyte is injected, the electrolyte can sequentially pass through the recess portion 260 and the electrolyte injection hole 251 and then enter the housing 100. Providing the electrolyte injection hole 251 facilitates the sealing after the injection of the electrolyte is completed, reducing the risk of electrolyte leakage. The sealing portion 250 has a smaller thickness compared to the insertion portion 220, and disposing the electrolyte injection hole 251 on the sealing portion 250 facilitates formation of the electrolyte injection hole 251 and injection of the electrolyte.

Optionally, two ends of the electrolyte injection hole 251 along the axial direction can respectively communicate with the recess portion 260 and the interior of the housing 100.

When the sealing portion 250 is provided with a weak region 211, to achieve the function of the weak region 211, the sealing of the electrolyte injection hole 251 is configured not to be disrupted by a pressure within a pressure threshold range or a temperature within a temperature threshold range inside the housing 100. Certainly, in some embodiments, the electrode terminal 200 may be provided with no electrolyte injection hole 251.

According to some embodiments of this application, optionally, as shown in FIG. 3, the battery cell 1 further includes a current collecting disc 400 and an electrode assembly 500 disposed inside the housing 100, where the current collecting disc 400 is configured to connect a tab 501 of the electrode assembly 500 to the electrode terminal 200, and a side of the sealing portion 250 facing away from the recess portion 260 is welded to the current collecting disc 400.

The current collecting disc 400 may be disposed between the electrode terminal 200 and the electrode assembly 500, serving to form a current loop between the electrode terminal 200 and the electrode assembly 500. Providing the current collecting disc 400 facilitates electrical connection between the electrode terminal 200 and the electrode assembly 500. Due to the characteristic of a small thickness, the sealing portion 250 is welded to the current collecting disc 400, which is conducive to achieving the electrical connection between the electrode terminal 200 and the current collecting disc 400 from a side of the electrode terminal 200 facing away from the current collecting disc 400.

According to some embodiments of this application, optionally, as shown in FIG. 3, the battery cell 1 includes an electrode assembly 500, and the housing 100 includes a shell 110 and an end cover 120, where one end of the shell 110 has an opening 111, the end cover 120 covers the opening 111, the shell 110 includes a side wall 112 and an end wall 113, the side wall 112 surrounds an outer side of the electrode assembly 500, the end wall 113 is disposed opposite the opening 111, and the wall portion 101 is the end cover 120 or the end wall 113.

In the above embodiments, the wall portion 101 is the end wall 113. In other embodiments, the wall portion 101 may alternatively be the end cover 120.

Since the end cover 120 or the end wall 113 is flatter compared to the side wall 112, disposing the electrode terminal 200 on the end cover 120 or the end wall 113 can improve the assembly efficiency of the battery cell 1.

The electrode assembly 500 may be supported by the end cover 120 or the end wall 113 inside the housing 100. If the weak region 211 is disposed on the end cover 120 or the end wall 113, the structural strength of the end cover 120 or the end wall 113 may be weakened, reducing the ability of the end cover 120 or the end wall 113 to withstand loads, thereby making the end cover 120 or the end wall 113 prone to deformation under force, which is not conducive to the assembly process of the battery cell 1. Therefore, disposing the weak region 211 on the electrode terminal 200 can reduce the likelihood of deformation of the end cover 120 or the end wall 113, facilitating the assembly of the battery cell 1.

According to some embodiments of this application, optionally, a melting point of a material of the electrode terminal 200 is lower than a melting point of a material of the housing 100.

When the electrode terminal 200 is welded to other components, the lower melting point of the material of the electrode terminal 200 is conducive to reducing the welding temperature, and the relatively higher melting point of the material of the housing 100 can reduce adverse effects of the welding process on the housing 100, thereby reducing the risk of electrolyte leakage.

According to some embodiments of this application, optionally, a difference between the melting point of the material of the housing 100 and the melting point of the material of the electrode terminal 200 is greater than 300°C.

Such an arrangement is conducive to reducing the welding temperature when the electrode terminal 200 is welded to other components, and can also reduce damage to the housing 100 during the welding process, thereby reducing the risk of electrolyte leakage.

According to some embodiments of this application, optionally, the material of the housing 100 includes steel, and the material of the electrode terminal 200 includes aluminum or copper.

Setting the material of the housing 100 to be steel allows the housing 100 to have a lower thermal expansion coefficient, and also allows the housing 100 to have good mechanical strength. The melting point of copper or aluminum is lower than that of steel, so the electrode terminal 200 being made of copper or aluminum allows the electrode terminal 200 to be more easily welded, and the copper or aluminum material facilitates processing and shaping.

According to some embodiments of this application, optionally, as shown in FIG. 3 to FIG. 10, the battery cell 1 includes a housing 100 and an electrode terminal 200. The housing 100 includes a wall portion 101, where the wall portion 101 is provided with an outlet hole 102. The electrode terminal 200 is disposed at the outlet hole 102, where the electrode terminal 200 is provided with a weak region 211, and the weak region 211 is configured to be ruptured when an internal pressure of the housing 100 exceeds a pressure threshold or a temperature exceeds a threshold, allowing the interior of the housing 100 to communicate with the exterior of the housing 100. The electrode terminal 200 is provided with an indentation slot 210, where the weak region 211 forms the bottom of the indentation slot 210. The electrode terminal 200 includes an insertion portion 220 and a first flange portion 230 connected to each other, where the insertion portion 220 is inserted into the outlet hole 102 along an axial direction of the electrode terminal 200, and in a radial direction of the electrode terminal 200, an outer circumferential surface of the first flange portion 230 at least partially extends beyond an outer circumferential surface of the insertion portion 220, and a portion of the first flange portion 230 disposed at the periphery of the outlet hole 102 is supported on a side of the wall portion 101 facing the interior of the housing 100, where the weak region 211 is disposed on the insertion portion 220 and/or the first flange portion 230. The electrode terminal 200 is provided with an indentation slot 210, where the weak region 211 forms the bottom of the indentation slot 210, and the indentation slot 210 is disposed on a side surface of the first flange portion 230 facing and/or facing away from the wall portion 101. The indentation slot 210 is at least partially disposed opposite a matching gap 240 between the outer circumferential surface of the insertion portion 220 and a wall of the outlet hole 102 along the axial direction. In the radial direction, a radial width D2 of the matching gap 240 is greater than a radial width D1 of the indentation slot 210. A projection of an outermost edge of the indentation slot 210 in the radial direction along the axial direction falls within the matching gap 240. In the radial direction, the radial width D1 of the indentation slot 210 is greater than or equal to 0.5 mm and less than or equal to 2 mm. In the axial direction, an axial depth H1 of the indentation slot 210 is greater than or equal to 0.1 times an axial thickness H0 of the first flange portion 230 and less than or equal to 0.9 times the axial thickness H0 of the first flange portion 230. The weak region 211 is at least partially located on the outer circumferential surface of the insertion portion 220. The electrode terminal 200 includes an insertion portion 220 and a sealing portion 250 connected to each other, where the insertion portion 220 is inserted into the outlet hole 102 along the axial direction of the electrode terminal 200, the insertion portion 220 is disposed in a cylindrical shape, and the sealing portion 250 seals an end of the insertion portion 220 facing the interior of the housing 100 to form a recess portion 260, where the weak region 211 is disposed on the sealing portion 250. The sealing portion 250 is welded to the insertion portion 220 and forms a weld mark 700, and the weak region 211 is located within the weld mark 700. The weak region 211 is disposed in a ring shape around a central axis of the outlet hole 102. The electrode terminal 200 includes an insertion portion 220 and a sealing portion 250 connected to each other, where the insertion portion 220 is inserted into the outlet hole 102 along the axial direction of the electrode terminal 200, the insertion portion 220 is disposed in a cylindrical shape, and the sealing portion 250 seals an end of the insertion portion 220 facing the interior of the housing 100 to form a recess portion 260. The battery cell 1 includes a sealing member 300, the sealing member 300 is configured to seal the recess portion 260, and the battery cell 1 is electrically connected to the outside through the sealing member 300. The recess portion 260 is configured to inject an electrolyte into the housing 100. The sealing portion 250 is provided with an electrolyte injection hole 251, where the electrolyte injection hole 251 implements communication between the interior of the housing 100 and the recess portion 260. The battery cell 1 further includes a current collecting disc 400 and an electrode assembly 500 disposed inside the housing 100, where the current collecting disc 400 is configured to connect a tab 501 of the electrode assembly 500 to the electrode terminal 200, and a side of the sealing portion 250 facing away from the recess portion 260 is welded to the current collecting disc 400. The battery cell 1 includes an electrode assembly 500, and the housing 100 includes a shell 110 and an end cover 120, where one end of the shell 110 has an opening 111, the end cover 120 covers the opening 111, the shell 110 includes a side wall 112 and an end wall 113, the side wall 112 surrounds an outer side of the electrode assembly 500, the end wall 113 is disposed opposite the opening 111, and the wall portion 101 is the end cover 120 or the end wall 113. A melting point of a material of the electrode terminal 200 is lower than a melting point of a material of the housing 100. A difference between the melting point of the material of the housing 100 and the melting point of the material of the electrode terminal 200 is greater than 300°C. The material of the housing 100 includes steel, and the material of the electrode terminal 200 includes aluminum or copper.

According to some embodiments of this application, as shown in FIG. 2, the battery 100a includes the battery cell 1 described above. Such an arrangement can improve stability and reliability of the battery cell 1 during operation by reducing the risk of explosion of the housing 100, thereby improving stability and reliability of the battery 100a during operation.

According to some embodiments of this application, as shown in FIG. 1, the electric apparatus includes the battery 100a described above. Such an arrangement can improve stability and reliability of the battery 100a during operation by improving stability and reliability of the battery cell 1 during operation, thereby improving stability and reliability of the electric apparatus during operation.

In conclusion, the embodiments of this application enable the electrode terminal 200 to fracture or bend along the weak region 211 under the action of pressure when the pressure exceeds the pressure threshold or the temperature exceeds the temperature threshold, allowing the interior of the housing 100 to communicate with the exterior of the housing 100 and excess gas inside the housing 100 to be discharged, reducing the risk of explosion of the battery cell 1 due to excessive internal pressure, also reducing the likelihood of deformation of the housing 100, and facilitating the assembly of the battery cell 1.

Finally, it should be noted that: the above embodiments are only used to illustrate the technical solutions of this application and not to limit them; although this application has been described in detail with reference to the foregoing embodiments, persons skilled in the art should understand that modifications can still be made to the technical solutions described in the foregoing embodiments, or equivalent replacements can be made to some or all of the technical features; these modifications or replacements do not cause the essence of the corresponding technical solutions to depart from the scope of the technical solutions of the embodiments of this application, and they should all be encompassed within the scope of the claims and specification of this application. In particular, as long as there is no structural conflict, various technical features mentioned in the embodiments can be combined in any manner. This application is not limited to the specific embodiments disclosed herein but includes all technical solutions falling within the scope of the claims.

## Claims

1. A battery cell, **characterized in that** the battery cell comprises:
a housing, wherein the housing comprises a wall portion, and the wall portion is provided with an outlet hole; and
an electrode terminal, wherein the electrode terminal is disposed at the outlet hole, the electrode terminal is provided with a weak region, the weak region is configured to be ruptured when an internal pressure or temperature of the housing exceeds a pressure threshold, allowing interior of the housing to communicate with exterior of the housing.

2. The battery cell according to claim 1, **characterized in that** the electrode terminal is provided with an indentation slot, wherein the weak region forms a bottom of the indentation slot.

3. The battery cell according to claim 1, **characterized in that** the electrode terminal comprises an insertion portion and a first flange portion connected to each other, wherein the insertion portion is inserted into the outlet hole along an axial direction of the electrode terminal, an outer circumferential surface of the first flange portion at least partially extends beyond an outer circumferential surface of the insertion portion in a radial direction of the electrode terminal, and a portion of the first flange portion disposed at a periphery of the outlet hole is supported on a side of the wall portion facing the interior of the housing, wherein the weak region is disposed on the insertion portion and/or the first flange portion.

4. The battery cell according to claim 3, **characterized in that** the electrode terminal is provided with an indentation slot, wherein the weak region forms a bottom of the indentation slot, and the indentation slot is disposed on a side surface of the first flange portion facing and/or facing away from the wall portion.

5. The battery cell according to claim 4, **characterized in that** the indentation slot is at least partially disposed opposite a matching gap between the outer circumferential surface of the insertion portion and a wall of the outlet hole along the axial direction.

6. The battery cell according to claim 5, **characterized in that** a radial width of the matching gap is greater than a radial width of the indentation slot in the radial direction.

7. The battery cell according to claim 6, **characterized in that** a projection of an outermost edge of the indentation slot in the radial direction along the axial direction falls within the matching gap.

8. The battery cell according to claim 7, **characterized in that** a radial width of the indentation slot is greater than or equal to 0.5 mm and less than or equal to 2 mm in the radial direction.

9. The battery cell according to claim 8, **characterized in that** an axial depth of the indentation slot is greater than or equal to 0.1 times an axial thickness of the first flange portion and less than or equal to 0.9 times the axial thickness of the first flange portion in the axial direction.

10. The battery cell according to claim 3, **characterized in that** the weak region is at least partially located on the outer circumferential surface of the insertion portion.

11. The battery cell according to claim 1, **characterized in that** the electrode terminal comprises an insertion portion and a sealing portion connected to each other, wherein the insertion portion is inserted into the outlet hole along an axial direction of the electrode terminal, the insertion portion is disposed in a cylindrical shape, the sealing portion seals an end of the insertion portion facing the interior of the housing to form a recess portion, and the weak region is disposed on the sealing portion.

12. The battery cell according to claim 11, **characterized in that** the sealing portion is welded to the insertion portion and forms a weld mark, wherein the weak region is located within the weld mark.

13. The battery cell according to claim 1, **characterized in that** the weak region is disposed in a ring shape around a central axis of the outlet hole.

14. The battery cell according to claim 1, **characterized in that** the electrode terminal comprises an insertion portion and a sealing portion connected to each other, wherein the insertion portion is inserted into the outlet hole along an axial direction of the electrode terminal, the insertion portion is disposed in a cylindrical shape, the sealing portion seals an end of the insertion portion facing the interior of the housing to form a recess portion, the battery cell comprises a sealing member, the sealing member is configured to seal the recess portion, and the battery cell is electrically connected to the outside through the sealing member.

15. The battery cell according to claim 14, **characterized in that** the recess portion is configured to inject an electrolyte into the housing.

16. The battery cell according to claim 15, **characterized in that** the sealing portion is provided with an electrolyte injection hole, wherein the electrolyte injection hole implements communication between the interior of the housing and the recess portion.

17. The battery cell according to claim 14, **characterized in that** the battery cell further comprises a current collecting disc and an electrode assembly disposed inside the housing, wherein the current collecting disc is configured to connect a tab of the electrode assembly to the electrode terminal, and a side of the sealing portion facing away from the recess portion is welded to the current collecting disc.

18. The battery cell according to any one of claims 1 to 17, **characterized in that** the battery cell comprises an electrode assembly, wherein the housing comprises a shell and an end cover, one end of the shell has an opening, the end cover covers the opening, the shell comprises a side wall and an end wall, the side wall surrounds an outer side of the electrode assembly, the end wall is disposed opposite the opening, and the wall portion is the end cover or the end wall.

19. The battery cell according to claim 1, **characterized in that** a melting point of a material of the electrode terminal is lower than a melting point of a material of the housing.

20. The battery cell according to claim 19, **characterized in that** a difference between the melting point of the material of the housing and the melting point of the material of the electrode terminal is greater than 300°C.

21. The battery cell according to claim 1, **characterized in that** a material of the housing comprises steel, and a material of the electrode terminal comprises aluminum or copper.

22. A battery, **characterized by** comprising the battery cell according to any one of claims 1 to 21.

23. An electric apparatus, **characterized in that** the electric apparatus comprises the battery according to claim 22.
